# EUROPEAN PATENT SPECIFICATION

(11) **EP 3 407 278 B1**
(45) Date of publication and mention of the grant of the patent: **15.04.2026**
(21) Application number: 18174383.2
(22) Date of filing: 25.05.2018
(51) Int. Cl.: G06Q 20/10, G06Q 20/40, G06Q 30/018

(54) **METHOD AND APPARATUS FOR REPORTING LOSS OF CARD OR DEVICE ASSOCIATED WITH ACCOUNT NUMBER OR STOLEN OF ACCOUNT NUMBER**
VERFAHREN UND VORRICHTUNG ZUR MELDUNG DES VERLUSTES DER KARTE ODER EINER EINRICHTUNG, DIE MIT EINER KONTONUMMER ODER EINER GESTOHLENEN KONTONUMMER VERBUNDEN IST
PROCÉDÉ ET APPAREIL POUR SIGNALER LA PERTE D'UNE CARTE OU D'UN DISPOSITIF ASSOCIÉ À UN NUMÉRO DE COMPTE OU LE VOL D'UN NUMÉRO DE COMPTE

(30) Priority: 25.05.2017 CN 201710381154
(43) Date of publication of application: 28.11.2018
(73) Proprietor: Beijing Xiaomi Mobile Software Co., Ltd., Beijing 100085 (CN)
(72) Inventor: ZHANG, Yang, Beijing, Beijing 100085 (CN)
(74) Representative: dompatent

(56) References cited:
- US-A1- 2003 217 001

## Description

### TECHNICAL FIELD

The present disclosure relates to the field of computer technologies, and more particularly, to a method and an apparatus for reporting the loss of an account number.

### BACKGROUND

In daily lives, users may have a variety of account numbers, such as ID cards, bank account numbers, mobile phone numbers and so on. These account numbers usually are associated with security of funds of the users. Significant risks may occur to the users in the event of information leakage (for example, loss of bank cards or mobile phones). Therefore, when occurrence of information leakage is found to a certain account number, a user needs to report the loss of the card or device associated with account number such that the account number may be temporarily suspended.

For example, when a user finds that a bank card is lost, the user may go to a bank where the bank card is opened or registered to transact the loss-reporting service of the bank card, so that the bank blocks or suspends the bank account of the bank card. When the user finds that his or her mobile phone is lost, the user may go to a business hall of the mobile phone operator to transact the loss-reporting service of the mobile phone card, so that the operator suspends service of the mobile phone number.

However, when information leakage occurs to a plurality of account numbers, the user needs to go to corresponding business halls to transact the loss-reporting service for each account number, which takes a relatively complex transaction procedure and a longer time, thereby causing poor security of funds of the user. Related technologies are known from a patent disclosure US 2003217001A1.

### SUMMARY

To overcome problems in related technologies, the present disclosure provides a method and an apparatus for reporting the loss of a card or a device associated with an account number or stolen of an account number. The technical solutions are as below. The invention is defined by the independent claims.

According to a first aspect of an embodiment of the present disclosure, there is provided a method for reporting the loss of a card or a device associated with an account number or stolen of an account number, which includes:
displaying a prestored account number list, the account number list comprising at least one account number;
receiving a loss-reporting instruction corresponding to a target account number among the at least one account number;
transmitting a first loss-reporting request to a locally-stored application program corresponding to the target account number, the first loss-reporting request carrying the target account number, the first loss-reporting request being used for notifying the application program to transmit a second loss-reporting request to a registration server of the target account number, and
transmitting the second loss-reporting request to the registration server of the target account number to notify the registration server to perform loss-reporting treatment on the target account number.

In this way, an authentication mode available for the user may be selected for authentication, or authentication modes with higher security levels may be set up for some loss-reporting scenes, thereby enhancing validity and security of authentication.

Alternatively, the determining a target authentication mode according to loss-reporting scene information entered by the user includes:
acquiring prestored reference usage information of a mobile terminal of the user and usage information of the mobile terminal within a preset period prior to current time; and
determining the target authentication mode according to the loss-reporting scene information entered by the user when the usage information matches the reference usage information.

The method further includes:
determining a preset authentication mode as the target authentication mode when the usage information mismatches the reference usage information.

In this way, the user's identity may be further authenticated according to the usage information, which may prevent other users from maliciously reporting the loss of the account number, thereby enhancing the security of the account number.

Alternatively, the determining a target authentication mode according to loss-reporting scene information entered by the user includes:
determining a forbidden authentication mode corresponding to the loss-reporting scene information entered by the user according to a corresponding relationship between prestored loss-reporting scene information and the forbidden authentication mode, and determining the target authentication mode among other authentication modes except the determined forbidden authentication mode.

In this way, an authentication mode available for the user is selected for authentication, thereby ensuring the validity of the authentication. For example, in case of loss of the user's mobile phone, Email authentication may be adopted for authentication.

Alternatively, the determining a target authentication mode according to loss-reporting scene information entered by the user includes:
determining an available authentication mode corresponding to the loss-reporting scene information entered by the user according to a corresponding relationship between prestored loss-reporting scene information and the available authentication mode to obtain the target authentication mode.

In this way, an authentication mode available for the user is selected for authentication, thereby ensuring the validity of the authentication. For example, in case of loss of the user's mobile phone, Email authentication may be adopted for authentication.

Alternatively, the transmitting a first loss-reporting request to a locally-stored application program corresponding to the target account number includes:
broadcasting the first loss-reporting request to each of locally-stored application programs; or
determining an application program corresponding to the target account number according to a prestored corresponding relationship between account numbers and application programs; and transmitting the first loss-reporting request to the determined application program.

Alternatively, the method further includes:
receiving an account number adding instruction, the account number adding instruction carrying an account number entered by a user; and
adding the account number into the account number list.

Alternatively, the method further includes:
transmitting, by the application program receiving the first loss-reporting request, the second loss-reporting request to the registration server of the target account number.

According to a second aspect of the embodiment of the present disclosure, there is provided an apparatus for reporting the loss of a card or a device associated with an account number or stolen of an account number, which includes:
a display module, configured to display a prestored account number list, the account number list comprising at least one account number;
a first receiving module, configured to receive a loss-reporting instruction corresponding to a target account number among the at least one account number; and
a first transmitting module, configured to transmit a first loss-reporting request to a locally-stored application program corresponding to the target account number, the first loss-reporting request carrying the target account number, the first loss-reporting request being used for notifying the application program to transmit a second loss-reporting request to a registration server of the target account number, and
a second transmitting module configured to transmit the second loss-reporting request to the registration server of the target account number to notify the registration server to perform loss-reporting treatment on the target account number.

Alternatively, the apparatus further includes:
an output module, configured to output authentication prompt information;
an acquiring module, configured to acquire authentication information entered by a user, and transmit the authentication information to a background server, enabling the background server to authenticate the user according to the authentication information.

The first transmitting module is further configured to transmit the first loss-reporting request to the locally-stored application program corresponding to the target account number when an authentication success message transmitted by the background server is received.

Alternatively, the output module includes:
a determining submodule, configured to determine a target authentication mode according to loss-reporting scene information entered by the user; and
an output submodule, configured to output the authentication prompt information corresponding to the target authentication mode.

Alternatively, the determining submodule is configured to:
acquire prestored reference usage information of a mobile terminal of the user and usage information of the mobile terminal within a preset period prior to current time; and
determine the target authentication mode according to the loss-reporting scene information entered by the user when the usage information matches the reference usage information.

The determining submodule is further configured to:
determine a preset authentication mode as the target authentication mode when the usage information mismatches the reference usage information.

Alternatively, the determining submodule is configured to:
determine a forbidden authentication mode corresponding to the loss-reporting scene information entered by the user according to a corresponding relationship between prestored loss-reporting scene information and the forbidden authentication mode, and determine the target authentication mode among other authentication modes except the determined forbidden authentication mode.

Alternatively, the determining submodule is configured to:
determine an available authentication mode corresponding to the loss-reporting scene information entered by the user according to a corresponding relationship between prestored loss-reporting scene information and the available authentication mode to obtain the target authentication mode.

Alternatively, the first transmitting module is configured to:
broadcasting the first loss-reporting request to each of locally-stored application programs; or
determining an application program corresponding to the target account number according to a prestored corresponding relationship between account numbers and application programs; and transmitting the first loss-reporting request to the determined application program.

Alternatively, the apparatus further includes:
a second receiving module, configured to receive an account number adding instruction, the account number adding instruction carrying an account number entered by a user; and
an adding module, configured to add the account number into the account number list.

Alternatively, the apparatus further includes:
a second transmitting module, configured to transmit the second loss-reporting request to the registration server of the target account number after the application program receives the first loss-reporting request.

According to a third aspect of the embodiment of the present disclosure, there is provided an apparatus for reporting the loss of a card or a device associated with an account number or stolen of an account number, which includes:
a processor, and
a memory, configured to store executable instructions of the processor.

The processor is configured to:
display a prestored account number list, the account number list comprising at least one account number;
receive a loss-reporting instruction corresponding to a target account number among the at least one account number; and
transmit a first loss-reporting request to a locally-stored application program corresponding to the target account number, the first loss-reporting request carrying the target account number, the first loss-reporting request being used for notifying the application program to transmit a second loss-reporting request to a registration server of the target account number, and
transmitting the second loss-reporting request to the registration server of the target account number to the registration server to perform loss-reporting treatment on the target account number.

According to a fourth aspect of the embodiment of the present disclosure, there is provided a computer readable storage medium, which stores a computer program. When the computer program is executed by the processor, the steps of any one of the methods according to the first aspect of the embodiment of the present disclosure are implemented.

According to a fifth aspect of the embodiments of the present disclosure, there is provided a computer program, when being executed on a processor of a terminal device, performs a method for reporting loss of a card or a device associated with an account number or stolen of an account number according to any embodiment described above.

The technical solutions provided by the embodiments of the present disclosure may include following beneficial effects.

The embodiments of the present disclosure include: displaying a prestored account number list, the account number list including at least one account number; receiving a loss-reporting instruction corresponding to a target account number among the at least one account number; and transmitting a loss-reporting request to a locally-stored application program corresponding to the target account number. The loss-reporting request carries the target account number, and the application program transmits a second loss-reporting request to a registration server of the target account number, wherein the second loss-reporting request is used for notifying the registration server to perform loss-reporting treatment on the target account number. In this way, it is unnecessary for a user to transact the loss-reporting service for each account number one by one, thereby enhancing the efficiency of reporting the loss of a card or a device associated with an account number and the security of funds of the user.

It is to be understood that both the foregoing general description and the following detailed description are exemplary and explanatory only and are not restrictive of the present disclosure.

### BRIEF DESCRIPTION OF THE DRAWINGS

The accompanying drawings herein, which are incorporated in and constitute a part of this specification, illustrate examples consistent with the present disclosure and, together with the description, serve to explain the principles of the present disclosure. In accompanying drawings:
FIG. 1 is a flow chart showing a method for reporting the loss of a card or a device associated with an account number or stolen of an account number according to an exemplary embodiment;
FIG. 2 is a schematic diagram showing an interface display according to an exemplary embodiment;
FIG. 3 is a schematic diagram showing an interface display according to an exemplary embodiment;
FIG. 4 is a schematic diagram showing an interface display according to an exemplary embodiment;
FIG. 5 is a schematic diagram showing an apparatus for reporting the loss of an account number according to an exemplary embodiment;
FIG. 6 is a schematic diagram showing an apparatus for reporting the loss of an account number according to an exemplary embodiment;
FIG. 7 is a schematic diagram showing an apparatus for reporting the loss of an account number according to an exemplary embodiment;
FIG. 8 is a schematic diagram showing an apparatus for reporting the loss of an account number according to an exemplary embodiment;
FIG. 9 is a schematic diagram showing an apparatus for reporting the loss of an account number according to an exemplary embodiment; and
FIG. 10 is a schematic structural diagram of a terminal shown according to an exemplary embodiment.

Specific embodiments of the present disclosure are shown by the above drawings, and more detailed description will be made hereinafter. These drawings and text description are not for limiting the scope of conceiving the present disclosure in any way, but for illustrating the concept of the present disclosure for those skilled in the art by referring to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following exemplary embodiments do not represent all implementations consistent with the present disclosure. Instead, they are merely examples of apparatuses and methods consistent with aspects related to the present disclosure as recited in the appended claims.

An embodiment of the present disclosure provides a method for reporting the loss of a card of a device associated with an account number or stolen of an account number, and the method may be implemented by a terminal. The terminal may be a personal computer (PC) terminal, or may be a mobile terminal such as a mobile phone or a tablet computer. The terminal may include a display unit, an input unit, a processor, and a memory. The display unit may be configured to display a prestored account number list. The input unit may be a touch screen or a physical button and the like, and may be configured to receive a loss-reporting instruction corresponding to a target account number among the at least one account number. The processor may be a central processing unit (CPU), and may be configured to transmit a loss-reporting request to a locally-stored application program corresponding to the target account number. The loss-reporting request carries the target account number so that the application program performs loss-reporting treatment on the target account number. The memory may be a random access memory (RAM), or a flash and the like, and may be configured to store received data, data required for processing procedures, data generated in the processing procedures, and the like, for example, the account number list and codes of each application program in the terminal, etc. In addition, the terminal may further include a power source, and a Bluetooth, etc.

In Step 101, a prestored account number list is displayed, which includes at least one account number.

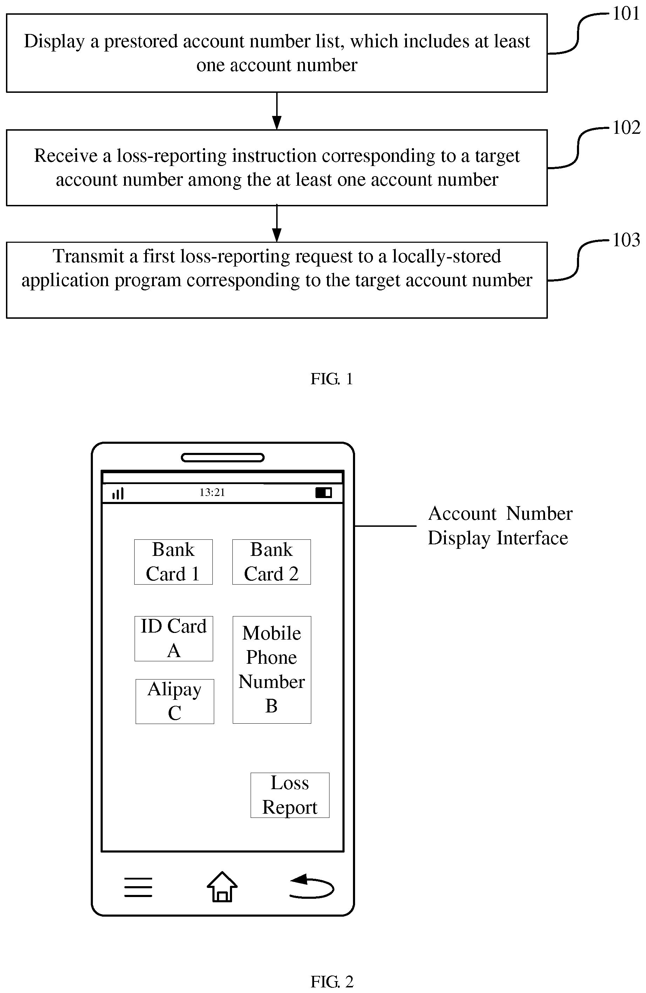

In an embodiment, the terminal may be provided with an application program having a function for reporting the loss of a card, a device or similar which is associated with an account number or stolen of an account number. When the terminal is a mobile terminal (such as a mobile phone), the application program may be a functional module in a system program of the mobile terminal. When the terminal is a PC terminal, the application program may be a functional module embedded in a certain webpage. When a user expects to use the loss-reporting function, the user may start the application program in the terminal. For a case where the user uses the application program for the first time, the terminal may display prompt information for confirming to start a loss-reporting service. The user may click on a confirmation option. The terminal may receive a confirmation instruction, and then may display an account number display interface, in which the account number list may be displayed, as shown in FIG. 2. For a case where the user has started the loss-reporting service, after receiving a starting instruction corresponding to the application program, the terminal may directly display the account number display interface. The account number list may include at least one account number, which may be an account number added by the user, or may be an account number preset by the terminal, for example, a mobile phone number.

Alternatively, the user may add an account number to be reported into the account number list as needed. The corresponding processing procedures may be as below: an account number adding instruction is received, the account number adding instruction carries a to-be-added account number entered by the user; and the to-be-added account number is added into the account number list.

In an embodiment, the account number display interface may include an account number adding option. When the user clicks the account number adding option, the terminal may display an account number information input interface, which may include one or more input boxes. The user may enter account number information into the account number information input interface. The account number information may include an account number and account opening or registration information (for example, an ID number and a mobile phone number of the user) corresponding to the account number. For example, when the account number is a bank account number, the user may enter a bank card number or last four numbers of the bank card number, a name of the bank card, the ID number of the user, a transaction password, and other information. For another example, when the account number is an Alipay account number, the user may enter the Alipay account number, a payment password, a mobile phone number bound to the Alipay account number, and other information. Upon entering the information, the user may click a completion option, and the terminal may receive an account number adding instruction, in which account number information entered by the user may be carried. The terminal may store the account number information of the account number and add the account number into the account number list. The user may add a plurality of account numbers into the account number list. The plurality of account numbers may be different types of account numbers, and the plurality of account numbers may be account numbers provided by different service providers.

In addition, after receiving the account number adding instruction, the terminal may also transmit an authentication request corresponding to the account number to a background server. The authentication request may carry the account number information of the account number entered by the user. After receiving the authentication request, the background server may parse the authentication request, acquire the account number information, determine a registration server corresponding to the account number, and then transmit the authentication request to the registration server. For example, when the account number is a bank card number of Bank of Beijing, the authentication request may be transmitted to a server of Bank of Beijing. The registration server may authenticate whether the account number information of the account number is correct, and may transmit an authentication result to the background server. If the authentication result indicates successful authentication, the background server may transmit a notification message indicating successful authentication to the terminal, and the terminal may add the account number into the account number list. If the authentication result indicates failed authentication, the background server may transmit a notification message indicating failed authentication to the terminal, and the terminal may output a prompt message indicating information error to remind the user to reenter the account number information.

In Step 102, a loss-reporting instruction corresponding to a target account number among the at least one account number is received.

In an embodiment, when the user finds that information of a certain account number (namely the target account number) is leaked (for example, discovery of loss of a certain bank card or a device bound with the account number or stolen of an account number), the user may select the target account number from the account number list and click on a loss-reporting option, and the terminal may receive a loss-reporting instruction corresponding to the target account number. The user may select one account number to report the loss, or select a plurality of account numbers to report the loss. That is, the number of the target account numbers may be one or more.

In Step 103, a first loss-reporting request is transmitted to a locally-stored application program corresponding to the target account number. The first loss-reporting request carries the target account number, and the first loss-reporting request is used for notifying the application program to transmit a second loss-reporting request to a registration server of the target account number. The second loss-reporting request is used for notifying the registration server to perform loss-reporting treatment on the target account number.

In an embodiment, a plurality of application programs corresponding to the account number may be prestored in the terminal, for example, a client of Bank of Beijing, a client (application program or software) of Bank of China, a client of Alipay, and so on. After receiving the loss-reporting instruction corresponding to the target account number, the terminal may transmit the first loss-reporting request to the application program corresponding to the target account number. The first loss-reporting request may carry the account number information entered by the user, such as the target account number and the transaction password, etc. After receiving the first loss-reporting request, the application program may transmit the second loss-reporting request to the background server (namely, the registration server of the target account number), and the registration server may perform loss-reporting treatment on the target account number. The second loss-reporting request may carry the target account number, or may carry all the account number information of the target account number. For example, after the user's card of Bank of Beijing is lost, the user may choose to report the loss of this bank card. The terminal may transmit the first loss-reporting request corresponding to the bank card to a locally-installed client of Bank of Beijing. After receiving the first loss-reporting request, the client of Bank of Beijing may transmit the second loss-reporting request corresponding to the bank card to the background server (namely, the registration server) of Bank of Beijing, so that the registration server performs loss-reporting treatment on the bank card, and blocks or suspends the account corresponding to the bank card, thereby improving security of properties of the user. The first loss-reporting request and the second loss-reporting request may carry identical or different information.

Alternatively, modes of transmitting a loss-reporting request by the terminal may be diverse. This embodiment provides two alternative processing modes:
Mode I: the first loss-reporting request is broadcasted to each of the locally-stored application programs.

In an embodiment, a system program of the terminal may be provided with interfaces for performing data transmission with the locally-installed application programs. The terminal may broadcast the first loss-reporting request to the application programs via these interfaces. After receiving the first loss-reporting request, the application programs may parse the first loss-reporting request to acquire an account number thereof, and then decide whether the account number is a registered account number of the respective application programs. The second loss-reporting request corresponding to the target account number may be transmitted to a server (namely, the registration server of the target account number) if the account number is the registered account number. Otherwise, the first loss-reporting request may be ignored. In addition, the application program may also receive a loss-reporting result transmitted by the registration server, and may transmit the loss-reporting result to the terminal. The terminal may output the loss-reporting result so that the user knows whether the report of loss succeeds.

Mode II: the application program corresponding to the target account number is determined according to a prestored relationship between the account numbers and the application programs; and the first loss-reporting request is transmitted to the determined application program.

In an embodiment, the relationship between the account numbers and the application programs may be prestored in the terminal, for example, the relationship between Alipay account number and Alipay client. The relationship may be set by the user, or the terminal may automatically determine the application program corresponding to the account number when receiving the account number entered by the user. For example, the terminal may broadcast the account number to each application program, which may query whether the account number is its own registered account number. A confirmation message may be transmitted to the terminal if the account number is the registered account number, and the terminal may establish the relationship between the account number and the application program transmitting the confirmation message. After receiving the loss-reporting instruction corresponding to the target account number, the terminal may acquire the target account number, then determine the application program corresponding to the target account number according to the relationship between the account number and the application program, and then transmit the first loss-reporting request to the application program. The application program may transmit, to its own server (namely, the registration server of the target account number), the second loss-reporting request corresponding to the target account number, so that the registration server performs loss-reporting treatment on the target account number. After performing the loss-reporting treatment, the registration server may transmit a loss-reporting result to the application program. After receiving the loss-reporting result, the application program may transmit the loss-reporting result to the terminal, and the terminal may output the loss-reporting result so that the user knows whether the report of loss is successful.

Alternatively, the identity of the user may be authenticated at first, and then the loss-reporting treatment is performed. The corresponding processing procedures are as below: authentication prompt information is outputted; authentication information entered by the user is acquired, and the authentication information is transmitted to a background server so that the background server performs identity authentication on the user according to the authentication information; and the step of transmitting a first loss-reporting request to a locally-stored application program corresponding to the target account number is executed when an authentication success message transmitted by the background server is received.

In an embodiment, a plurality of authentication modes may be prestored in the terminal. For example, the authentication modes may include login password authentication, payment password authentication, short message service (SMS) authentication, identity information authentication, bank card information authentication, behavior record authentication, purchase record authentication and contact record authentication, etc., and may further include fingerprint, voiceprint, iris and other biometric feature information authentication. The terminal may authenticate the identity of the user after the user starts the application program for reporting the loss of a card or a device associated with an account number or stolen of an account number. Alternatively, the terminal may authenticate the identity of the user after the user selects the target account number.

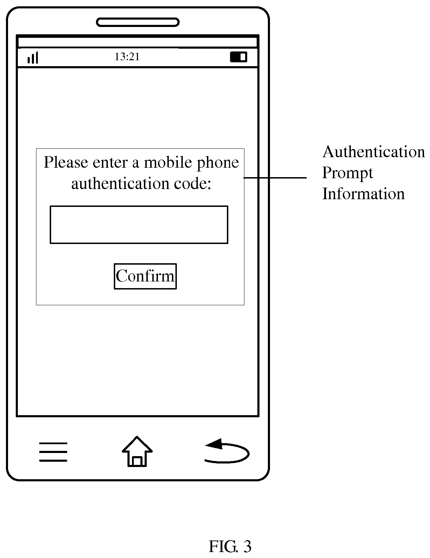

The terminal may output authentication prompt information to remind the user to enter the ID number, or to remind the user to enter a mobile phone authentication code transmitted by the background server, as shown in FIG. 3. The user may enter the corresponding authentication information according to the authentication prompt information. The terminal may transmit the authentication information to the background server. The background server may compare the authentication information with prestored reference authentication information. It may be determined that the user is successfully authenticated if the authentication information is the same as the reference authentication information. Otherwise, it is determined that the user authentication fails. The background server may transmit the authentication result to the terminal. For example, the background server may transmit an authentication success message or an authentication failure message. Step 103 may be executed if the terminal receives the authentication success message, or the account number display interface may be displayed. Prompt information indicating that authentication failed may be outputted if the terminal receives the authentication failure message.

Alternatively, a to-be-used target authentication mode may be determined according to a loss-reporting scenario selected by the user. The corresponding processing procedures may be as follows: the target authentication mode is determined according to loss-reporting scenario information entered by the user; and the authentication prompt information corresponding to the target authentication mode is outputted.

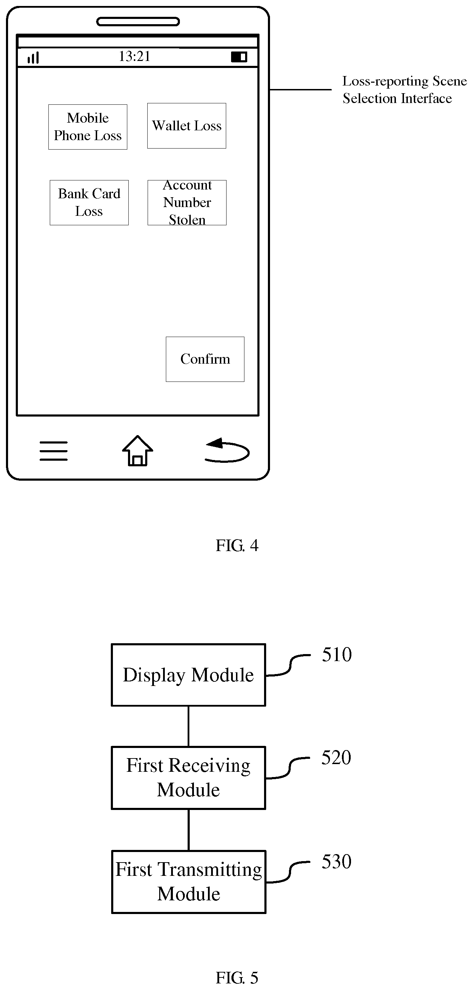

In an embodiment, the user may also enter the loss-reporting scenario information in the terminal. For example, the terminal may display a loss-reporting scenario selection list, which may include a plurality of loss-reporting scenarios, such as loss of a wallet (i.e., loss of an ID card and a bank card simultaneously), loss of a mobile phone, loss of a bank card, Alipay account number stolen, and so on. As shown in FIG. 4, a schematic diagram of a loss-reporting scenario selection interface is illustrated. The user may select a loss-reporting scenario, and the terminal may receive a selection instruction corresponding to the loss-reporting scenario and acquire the corresponding loss-reporting scenario information (such as an identifier of the loss-reporting scenario information). Alternatively, the user may also manually enter the loss-reporting scenario information. The terminal may prestore a relationship between the loss-reporting scenario information and a forbidden authentication mode, determine the forbidden authentication mode corresponding to the loss-reporting scenario information entered by the user, and then determine the to-be-used target authentication mode among other authentication modes except the forbidden authentication mode. For example, when the loss-reporting scenario selected by the user is loss of a mobile phone, the forbidden authentication mode is an SMS authentication, and Email authentication or payment password authentication may be adopted for authentication. When the loss-reporting scenario selected by the user is loss of a bank card, the forbidden authentication mode is a bank card information authentication (this is because the user may not remember the bank card number), and the SMS authentication or a fingerprint authentication may be adopted for authentication. Alternatively, the terminal may prestore the relationship between the loss-reporting scenario information and an available authentication mode, determine the available authentication mode corresponding to the loss-reporting scenario information and obtain the target authentication mode. For example, when the loss-reporting scenario selected by the user is loss of a mobile phone, the available authentication mode is the payment password authentication. When the loss-reporting scenario selected by the user is loss of a bank card, the available authentication mode is identity information authentication (for example, entering an ID number) or SMS authentication. In this way, not only an authentication mode available for the user may be set, but also authentication modes having different security levels may be set for different loss-reporting scenarios, thereby improving validity and security of authentication. The determining the processing procedure of the target authentication mode may also be executed by the background server. After determining the target authentication mode, the background server may transmit the identifier of the target authentication mode to the terminal so that the terminal outputs the authentication prompt information corresponding to the target authentication mode.

Alternatively, identity recognition of the user may be performed in combination with usage information of the mobile terminal (such as the mobile phone), and the corresponding processing procedures may be as follows: prestored reference usage information of the mobile terminal of the user and usage information of the mobile terminal within a preset period of time before the current time may be acquired. The target authentication mode is determined according to the loss-reporting scenario information entered by the user if the usage information matches the reference usage information. Otherwise, a preset authentication mode is determined as the target authentication mode.

In an embodiment, usage information of each mobile terminal may be recorded in real time in the background server. The usage information may include usage information of an application program and geographical location information of the mobile terminal, etc. The usage information of an application program may be information of common application program information in the mobile terminal, for example, an identifier of an application program whose frequency of use is greater than a preset frequency threshold, or a frequency of use of each application program. The geographical location information may be a geographical location frequently occurring in the mobile terminal, for example, a geographical location where occurrence duration of the mobile terminal is greater than a preset duration threshold. The background server may determine the reference usage information in the mobile terminal according to usage information within a preset historical duration of the mobile terminal.

When the terminal needs to authenticate the identity of the user, the terminal may transmit an authentication request to the background server. The authentication request may carry an identifier of the mobile terminal used by the user, or may carry the loss-reporting scenario information entered by the user. After receiving the authentication request, the background server may parse the authentication request, acquire the identifier of the mobile terminal and the loss-reporting scenario information, and then acquire the prestored reference usage information corresponding to the identifier of the mobile terminal. The background server may also acquire usage information of the mobile terminal within a preset period of time before the current time, and then compare the usage information with the reference usage information. For example, the number of common application programs jointly included in the usage information and the reference usage information may be determined, and it may be determined whether the frequently occurring geographical locations are identical. If the background server determines that the usage information matches the reference usage information (for example, the number of the common application programs is greater than the preset number threshold, and the frequently occurring geographical locations are identical), this indicates that the loss-reporting operation is performed by the user himself or herself, and the target authentication mode may be determined according to the loss-reporting scenario information entered by the user. If the background server determines that the usage information mismatches the reference usage information, this indicates that someone may steal the mobile phone of the users for malicious report of loss. In this case, the preset authentication mode may be determined as the target authentication mode to authenticate the identity of the user. For example, the preset authentication mode may include entering the ID number of the user or a payment password of a certain account number, and other authentication modes having higher security levels.

The embodiments of the present disclosure include: displaying a prestored account number list, the account number list including at least one account number; receiving a loss-reporting instruction corresponding to a target account number among the at least one account number; and transmitting a loss-reporting request to a locally-stored application program corresponding to the target account number. The loss-reporting request carries the target account number, and the application program transmits a second loss-reporting request to a registration server of the target account number, wherein the second loss-reporting request is used for notifying the registration server to perform loss-reporting treatment on the target account number. In this way, it is unnecessary for a user to transact the loss-reporting service of each account number one by one, thereby enhancing the efficiency of reporting the loss of an account number and the security of funds of the user.

Based on the same technical conception, an embodiment of the present disclosure also provides an apparatus for reporting the loss of an account number, as shown in FIG. 5, the apparatus includes: a display module 510, a first receiving module 520, and a first transmitting module 530.

The display module 510 is configured to display a prestored account number list, wherein the account number list includes at least one account number.

The first receiving module 520 is configured to receive a loss-reporting instruction corresponding to a target account number among the at least one account number.

The first transmitting module 530 is configured to transmit a first loss-reporting request to a locally-stored application program corresponding to the target account number. The first loss-reporting request carries the target account number. The first loss-reporting request is used for notifying the application program to transmit a second loss-reporting request to a registration server of the target account number. The second loss-reporting request being used for notifying the registration server to perform loss-reporting treatment on the target account number.

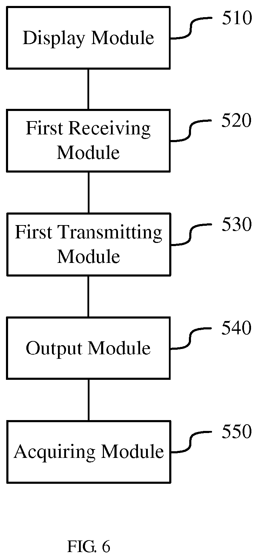

Alternatively, as shown in FIG. 6, the apparatus further includes:
an output module 540, configured to output authentication prompt information; and
an acquiring module 550, configured to acquire authentication information entered by a user, and transmit the authentication information to a background server so that the background server authenticates an identity of the user according to the authentication information.

The first transmitting module 530 is further configured to execute the step of transmitting a first loss-reporting request to a locally-stored application program corresponding to the target account number when an authentication success message transmitted by the background server is received.

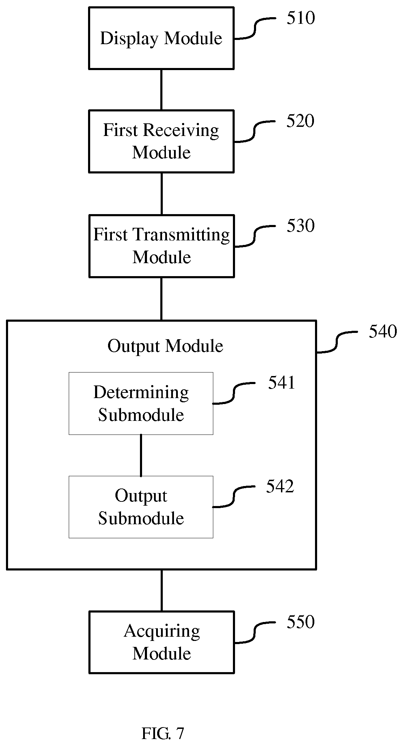

Alternatively, as shown in FIG. 7, the output module 540 includes:
a determining submodule 541, configured to determine a target authentication mode according to loss-reporting scenario information entered by the user; and
an output submodule 542, configured to output the authentication prompt information corresponding to the target authentication mode.

Alternatively, the determining submodule 541 is configured to:
acquire prestored reference usage information of a mobile terminal of the user and usage information of the mobile terminal within a preset period of time before current time; and
determine the target authentication mode according to the loss-reporting scenario information entered by the user when the usage information matches the reference usage information.

The determining submodule 541 is further configured to:
determine a preset authentication mode as the target authentication mode when the usage information mismatches the reference usage information.

Alternatively, the determining submodule 541 is configured to:
determine a forbidden authentication mode corresponding to the loss-reporting scene information entered by the user according to a relationship between the prestored loss-reporting scenario information and the forbidden authentication mode, and determine the to-be-used target authentication mode among other authentication modes except the determined forbidden authentication mode.

Alternatively, the determining submodule 541 is configured to:
determine an available authentication mode corresponding to the loss-reporting scenario information entered by the user according to a relationship between the prestored loss-reporting scenario information and the available authentication mode to obtain the target authentication mode.

Alternatively, the first transmitting module 530 is configured to:
broadcast the first loss-reporting request to each of the locally-stored application programs; or
determine the application program corresponding to the target account number according to a prestored relationship between the account numbers and the application programs; and
transmit the first loss-reporting request to the determined application program.

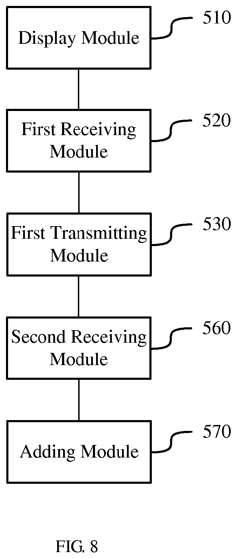

Alternatively, as shown in FIG. 8, the apparatus further includes:
a second receiving module 560, configured to receive an account number adding instruction, wherein the account number adding instruction carries a to-be-added account number entered by a user; and
an adding module 570, configured to add the to-be-added account number into the account number list.

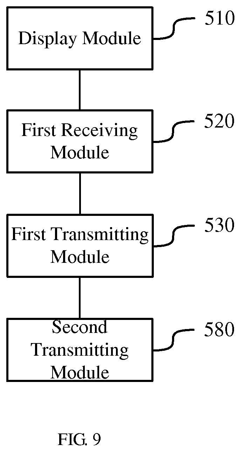

Alternatively, as shown in FIG. 9, the apparatus further includes:
a second transmitting module 580, configured to transmit the second loss-reporting request to the registration server of the target account number after the application program receives the first loss-reporting request. The second loss-reporting request is used for notifying the registration server to perform loss-reporting treatment on the target account number.

With regard to the apparatus in the foregoing embodiments, specific implementations for executing operations by modules thereof have been described in detail in the embodiments related to the method, and thus are not elaborated herein.

The embodiments of the present disclosure include: displaying a prestored account number list, the account number list including at least one account number; receiving a loss-reporting instruction corresponding to a target account number among the at least one account number; and transmitting a loss-reporting request to a locally-stored application program corresponding to the target account number. The loss-reporting request carries the target account number, and the application program transmits a second loss-reporting request to a registration server of the target account number, wherein the second loss-reporting request is used for notifying the registration server to perform loss-reporting treatment on the target account number. In this way, it is unnecessary for a user to transact the loss-reporting service of each account number one by one, thereby enhancing the efficiency of reporting the loss of an account number and the security of funds of the user.

It should be explained that, when the apparatus for reporting the loss of an account number provided by the above embodiments reports the loss of an account number, division of the above functional modules is described as an example. In actual application, the above functions may be allocated to different functional modules for implementation according to actual needs. That is, the content structure of the device is divided into different functional modules to accomplish part or all of the functions described as above. In addition, the apparatus for reporting the loss of an account number and the method for reporting the loss of an account number provided by the above embodiments belong to the same conception, the specific implementations thereof have been described in details in the method embodiments, and thus not elaborated herein.

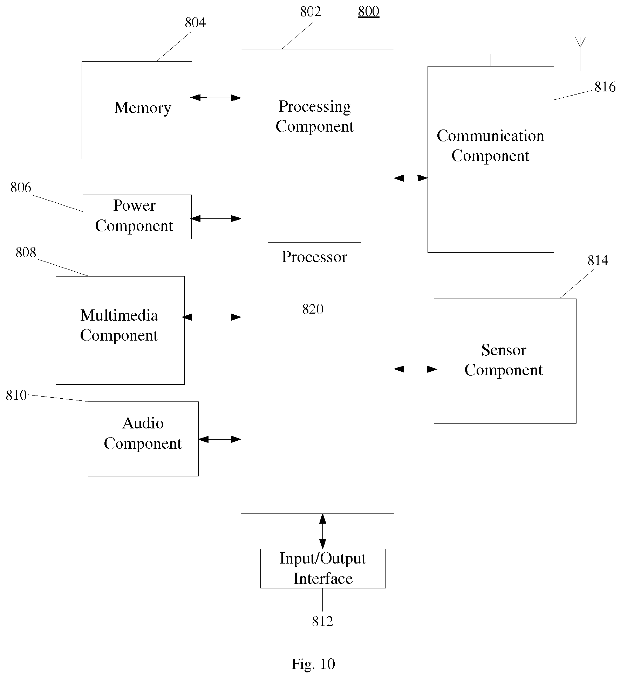

A schematic structural diagram of a terminal is also shown according to the embodiment of the present disclosure. The terminal may be a mobile terminal such as a mobile phone or a tablet computer. Referring to FIG. 10, the terminal 800 may include one or more of the following components: a processing component 802, a memory 804, a power component 806, a multimedia component 808, an audio component 810, an input/output (I/O) interface 812, a sensor component 814 and a communication component 816.

The processing component 802 typically controls overall operations of the terminal 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the audio output device 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the audio output device 800 is in an operation mode, such as a call mode, a recording mode, and a voice recognition mode. The received audio signal may be further stored in the memory 804 or transmitted via the communication component 816.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method for reporting the loss of an account number.

In exemplary embodiments, there is also provided a non-transitory computer readable storage medium including instructions, such as included in the memory 804, executable by the processor 820 in the terminal 800, for performing the above-described methods for allocating SR resources. For example, the non-transitory computer-readable storage medium may be a ROM, a RAM, a CD-ROM, a magnetic tape, a floppy disc, an optical data storage device, and the like.

The embodiments of the present disclosure include: displaying a prestored account number list, the account number list including at least one account number; receiving a loss-reporting instruction corresponding to a target account number among the at least one account number; and transmitting a loss-reporting request to a locally-stored application program corresponding to the target account number. The loss-reporting request carries the target account number, and the application program transmits a second loss-reporting request to a registration server of the target account number, wherein the second loss-reporting request is used for notifying the registration server to perform loss-reporting treatment on the target account number. In this way, it is unnecessary for a user to transact the loss-reporting service of each account number one by one, thereby enhancing the efficiency of reporting the loss of an account number and the security of funds of the user.

## Claims

1. A method executed on a terminal for reporting loss of a card or a device associated with an account number or stolen of an account number, comprising:
displaying (101) a prestored account number list, the account number list comprising a plurality of account numbers provided by different service providers;
receiving (102) a loss-reporting instruction corresponding to a target account number among the plurality of account numbers;
determining an application program corresponding to the target account number according to a prestored
relationship between the account numbers and application programs, and transmitting (103) a first loss-reporting request to the determined locally stored application program, the first loss-reporting request carrying the target account number, the first loss-reporting request being used for notifying the application program to transmit a second loss-reporting request to a registration server of the target account number, and
transmitting the second loss-reporting request to the registration server of the target account number to notify the registration server to perform loss-reporting treatment on the target account number,
wherein before transmitting the first loss-reporting request to the determined locally stored application program, the method further comprises:
determining a target authentication mode according to loss-reporting scenario information entered by a user;
outputting authentication prompt information corresponding to the target authentication mode;
acquiring authentication information entered by the user, and transmitting the authentication information to a background server, enabling the background server to authenticate the user according to the authentication information; and
executing the step of transmitting the first loss-reporting request to the determined locally stored application program when an authentication success message transmitted by the background server is received,
wherein, before determining the application program corresponding to the target account number according to the relationship, the method further comprises:
broadcasting, when receiving the account number entered by the user, the account number to each of the application programs;
receiving a confirmation message transmitted by the determined locally stored application program confirming that the account number is a registered account number of the determined locally stored application program; and
establishing the relationship between the account number and the determined locally stored application program.

2. The method according to claim 1, wherein the determining a target authentication mode according to loss-reporting scenario information entered by the user comprises:
determining the target authentication mode according to the loss-reporting scenario information entered by the user when usage information of a mobile terminal of the user within a preset period prior to current time matches reference usage information of the mobile terminal of the user; and
the method further comprises:
determining a preset authentication mode as the target authentication mode when the usage information mismatches the reference usage information.

3. The method according to claim 1, wherein the determining a target authentication mode according to loss-reporting scenario information entered by the user comprises:
determining the target authentication mode among other authentication modes except a forbidden authentication mode corresponding to the loss-reporting scenario information entered by the user.

4. The method according to claim 1, wherein the determining a target authentication mode according to loss-reporting scenario information entered by the user comprises:
determining the target authentication mode among available authentication modes corresponding to the loss-reporting scenario information entered by the user.

5. The method according to claim 1, further comprising:
receiving an account number adding instruction, the account number adding instruction carrying an account number entered by a user; and
adding the account number into the account number list.

6. The method according to claim 1, wherein the transmitting the second loss-reporting request to the registration server of the target account number is performed by the application program receiving the first loss-reporting request.

7. An apparatus for reporting loss of a card or a device associated with an account number or stolen of an account number, comprising:
a display module (510), configured to display a prestored account number list, the account number list comprising a plurality of account numbers;
a first receiving module (520), configured to receive a loss-reporting instruction corresponding to a target account number among the plurality of account numbers;
a first transmitting module (530), configured to determine an application program corresponding to the target account number according to prestored relationship between the account numbers and application programs, and transmit a first loss-reporting request to the determined locally stored application program, the first loss-reporting request carrying the target account number, the first loss-reporting request being used for notifying the application program to transmit a second loss-reporting request to a registration server of the target account number;
a second transmitting module, configured to transmit the second loss-reporting request to the registration server of the target account number to notify the registration server to perform loss-reporting treatment on the target account number,
an output module (540), comprising: a determining submodule (541), configured to determine a target authentication mode according to loss-reporting scenario information entered by a user; and an output submodule (542), configured to output an authentication prompt information corresponding to the target authentication mode;
an acquiring module (550), configured to acquire authentication information entered by the user, and transmit the authentication information to a background server, enabling the background server to authenticate the user according to the authentication information; wherein
the first transmitting module is further configured to transmit the first loss-reporting request to the determined locally stored application program corresponding to the target account number when an authentication success message transmitted by the background server is received,
wherein, before determining the application program corresponding to the target account number according to the relationship, the first transmitting module is further configured to:
broadcast, when receiving the account number entered by the user, the account number to each of the application programs;
receive a confirmation message transmitted by the determined locally stored application program confirming that the account number is a registered account number of the determined locally stored application program; and
establish the relationship between the account number and the determined locally stored application program.

8. The apparatus according to claim 7, wherein the determining submodule is configured to:
determining the target authentication mode according to the loss-reporting scenario information entered by the user when usage information of a mobile terminal of the user within a preset period prior to current time matches reference usage information of the mobile terminal of the user; and
the determining submodule is further configured to:
determine a preset authentication mode as the target authentication mode when the usage information mismatches the reference usage information.

9. The apparatus according to claim 7, wherein the determining submodule is configured to:
determine the target authentication mode among other authentication modes except a forbidden authentication mode corresponding to the loss-reporting scenario information entered by the user, or determine the target authentication mode among available authentication modes corresponding to the loss-reporting scenario information entered by the user.

10. A computer program, when being executed on a processor of a terminal device, performs a method for reporting loss of a card or a device associated with an account number or stolen of an account number according to any one of claims 1-6.

## Patentansprüche

1. Verfahren, das auf einem Endgerät ausgeführt wird, zum Melden des Verlustes einer Karte oder eines Geräts, das mit einer Kontonummer verknüpft ist, oder des Diebstahls einer Kontonummer, umfassend:
Anzeigen (101) einer vorgespeicherten Kontonummernliste, wobei die Kontonummernliste eine Vielzahl von Kontonummern umfasst, die von verschiedenen Dienstanbietern bereitgestellt werden;
Empfangen (102) einer Verlustmeldeanweisung, die einer Zielkontonummer aus der Vielzahl der Kontonummern entspricht;
Bestimmen eines Anwendungsprogramms, das der Zielkontonummer entspricht, gemäß einer vorgespeicherten Beziehung zwischen den Kontonummern und Anwendungsprogrammen, und Übertragen (103) einer ersten Verlustmeldeanforderung an das bestimmte lokal gespeicherte Anwendungsprogramm, wobei die erste Verlustmeldeanforderung die Zielkontonummer trägt, wobei die erste Verlustmeldeanforderung verwendet wird, um das Anwendungsprogramm zu benachrichtigen, eine zweite Verlustmeldeanforderung an einen Registrierungsserver der Zielkontonummer zu übertragen, und
Übertragen der zweiten Verlustmeldeanforderung an den Registrierungsserver der Zielkontonummer, um den Registrierungsserver zu benachrichtigen, eine Verlustmeldebehandlung für die Zielkontonummer durchzuführen,
wobei das Verfahren vor dem Übertragen der ersten Verlustmeldeanforderung an das bestimmte lokal gespeicherte Anwendungsprogramm ferner umfasst:
Bestimmen eines Zielauthentifizierungsmodus entsprechend der von einem Benutzer eingegebenen Verlustmeldeszenario-Informationen;
Ausgeben von Authentifizierungsaufforderungsinformationen, die dem Zielauthentifizierungsmodus entsprechen;
Erfassen von Authentifizierungsinformationen, die von dem Benutzer eingegeben werden, und Übertragen der Authentifizierungsinformationen an einen Hintergrundserver, wodurch der Hintergrundserver in die Lage versetzt wird, den Benutzer gemäß den Authentifizierungsinformationen zu authentifizieren; und
Ausführen des Schritts des Übertragens der ersten Verlustmeldeanforderung an das bestimmte lokal gespeicherte Anwendungsprogramm, wenn eine vom Hintergrundserver übertragene Authentifizierungserfolgsmeldung empfangen wird,
wobei das Verfahren vor dem Bestimmen des Anwendungsprogramms, das der Zielkontonummer gemäß der Beziehung entspricht, ferner umfasst:
beim Empfang der vom Benutzer eingegebenen Kontonummer, Senden der Kontonummer an jedes der Anwendungsprogramme;
Empfangen einer Bestätigungsnachricht, die von dem bestimmten lokal gespeicherten Anwendungsprogramm gesendet wird und bestätigt, dass die Kontonummer eine registrierte Kontonummer des bestimmten lokal gespeicherten Anwendungsprogramms ist; und
Herstellen der Beziehung zwischen der Kontonummer und dem bestimmten lokal gespeicherten Anwendungsprogramm.

2. Verfahren nach Anspruch 1, wobei das Bestimmen eines Zielauthentifizierungsmodus gemäß der vom Benutzer eingegebenen Verlustmeldeszenario-Information umfasst: Bestimmen des Zielauthentifizierungsmodus gemäß der vom Benutzer eingegebenen Verlustmeldungsszenario-Information, wenn die Nutzungsinformation eines mobilen Endgeräts des Benutzers innerhalb eines voreingestellten Zeitraums vor der aktuellen Zeit mit der Referenznutzungsinformation des mobilen Endgeräts des Benutzers übereinstimmt; und
wobei das Verfahren ferner umfasst:
Bestimmen eines voreingestellten Authentifizierungsmodus als Zielauthentifizierungsmodus, wenn die Nutzungsinformationen nicht mit den Referenznutzungsinformationen übereinstimmen.

3. Verfahren nach Anspruch 1, wobei das Bestimmen eines Zielauthentifizierungsmodus gemäß der vom Benutzer eingegebenen Verlustmeldeszenario-Information umfasst: Bestimmen des Zielauthentifizierungsmodus unter anderen Authentifizierungsmodi mit Ausnahme eines verbotenen Authentifizierungsmodus, der den vom Benutzer eingegebenen Verlustmeldeszenario-Informationen entspricht.

4. Verfahren nach Anspruch 1, wobei das Bestimmen eines Zielauthentifizierungsmodus gemäß der vom Benutzer eingegebenen Verlustmeldeszenario-Information umfasst: Bestimmen des Zielauthentifizierungsmodus unter verfügbaren Authentifizierungsmodi, der den vom Benutzer eingegebenen Verlustmeldeszenario-Informationen entspricht.

5. Verfahren nach Anspruch 1, das ferner umfasst:
Empfangen einer Anweisung zum Hinzufügen einer Kontonummer, wobei die Anweisung zum Hinzufügen der Kontonummer eine von einem Benutzer eingegebene Kontonummer enthält; und
Hinzufügen der Kontonummer in die Kontonummernliste.

6. Verfahren nach Anspruch 1, wobei die Übermittlung der zweiten Verlustmeldeanforderung an den Registrierungsserver der Zielkontonummer durch das Anwendungsprogramm, das die erste Verlustmeldeanforderung empfängt, durchgeführt wird.

7. Vorrichtung zum Melden des Verlustes einer Karte oder eines Geräts, das mit einer Kontonummer verknüpft ist, oder des Diebstahls einer Kontonummer, aufweisend:
ein Anzeigemodul (510), das so ausgebildet ist, dass es eine vorgespeicherte Kontonummernliste anzeigt, wobei die Kontonummernliste eine Vielzahl von Kontonummern aufweist;
ein erstes Empfangsmodul (520), das so ausgebildet ist, dass es eine Verlustmeldungsanweisung empfängt, die einer Zielkontonummer aus der Vielzahl der Kontonummern entspricht;
ein erstes Übertragungsmodul (530), das dazu ausgebildet ist, ein Anwendungsprogramm zu bestimmen, das der Zielkontonummer entspricht, gemäß einer vorgespeicherten Beziehung zwischen den Kontonummern und Anwendungsprogrammen, und
eine erste Verlustmeldeanforderung an das bestimmte lokal gespeicherte Anwendungsprogramm zu übertragen, wobei die erste Verlustmeldeanforderung die Zielkontonummer trägt, wobei die erste Verlustmeldeanforderung verwendet wird, um das Anwendungsprogramm zu benachrichtigen, eine zweite Verlustmeldeanforderung an einen Registrierungsserver der Zielkontonummer zu übertragen;
ein zweites Übertragungsmodul, das dazu ausgebildet ist, die zweite Verlustmeldeanforderung an den Registrierungsserver der Zielkontonummer zu übertragen, um den Registrierungsserver zu benachrichtigen, eine Verlustmeldebehandlung für die Zielkontonummer durchzuführen,
ein Ausgabemodul (540), das aufweist: ein Bestimmungs-Submodul (541), das so ausgebildet ist, dass es einen Zielauthentifizierungsmodus gemäß den von einem Benutzer eingegebenen Verlustmeldungsszenario-Informationen bestimmt; und ein Ausgabe-Submodul (542), das so ausgebildet ist, dass es eine dem Zielauthentifizierungsmodus entsprechende Authentifizierungsaufforderungsinformation ausgibt;
ein Erfassungsmodul (550), das dazu ausgebildet ist, von dem Benutzer eingegebene Authentifizierungsinformationen zu erfassen und die Authentifizierungsinformationen an einen Hintergrundserver zu übertragen, wodurch der Hintergrundserver in die Lage versetzt wird, den Benutzer gemäß den Authentifizierungsinformationen zu authentifizieren; wobei
das erste Übertragungsmodul ferner dazu ausgebildet ist, die erste Verlustmeldeanforderung an das bestimmte lokal gespeicherte Anwendungsprogramm zu übertragen, das der Zielkontonummer entspricht, wenn eine vom Hintergrundserver übertragene Authentifizierungserfolgsnachricht empfangen wird,
wobei das erste Übertragungsmodul vor dem Bestimmen des Anwendungsprogramms, das der Zielkontonummer gemäß der Beziehung entspricht, ferner für Folgendes ausgebildet ist:
beim Empfang der vom Benutzer eingegebenen Kontonummer, Senden der Kontonummer an jedes der Anwendungsprogramme;
Empfangen einer Bestätigungsnachricht, die von dem bestimmten lokal gespeicherten Anwendungsprogramm gesendet wird und bestätigt, dass die Kontonummer eine registrierte Kontonummer des bestimmten lokal gespeicherten Anwendungsprogramms ist; und
Herstellen der Beziehung zwischen der Kontonummer und dem bestimmten lokal gespeicherten Anwendungsprogramm.

8. Vorrichtung nach Anspruch 7, wobei das Bestimmungs-Submodul für Folgendes ausgebildet ist:
Bestimmen des Zielauthentifizierungsmodus gemäß der vom Benutzer eingegebenen Verlustmeldungsszenario-Information, wenn die Nutzungsinformation eines mobilen Endgeräts des Benutzers innerhalb eines voreingestellten Zeitraums vor der aktuellen Zeit mit der Referenznutzungsinformation des mobilen Endgeräts des Benutzers übereinstimmt; und
wobei das Bestimmungs-Submodul ferner für Folgendes ausgebildet ist:
Bestimmen eines voreingestellten Authentifizierungsmodus als Zielauthentifizierungsmodus, wenn die Nutzungsinformationen nicht mit den Referenznutzungsinformationen übereinstimmen.

9. Vorrichtung nach Anspruch 7, wobei das Bestimmungs-Submodul für Folgendes ausgebildet ist:
Bestimmen des Zielauthentifizierungsmodus unter anderen Authentifizierungsmodi mit Ausnahme eines verbotenen Authentifizierungsmodus, der den vom Benutzer eingegebenen Verlustmeldeszenario-Informationen entspricht, oder Bestimmen des Zielauthentifizierungsmodus unter den verfügbaren Authentifizierungsmodi, die den vom Benutzer eingegebenen Verlustmeldeszenario-Informationen entsprechen.

10. Computerprogramm, das, wenn es auf einem Prozessor eines Endgeräts ausgeführt wird, ein Verfahren zum Melden des Verlustes einer Karte oder eines Geräts, das mit einer Kontonummer verknüpft ist, oder des Diebstahls einer Kontonummer gemäß einem der Ansprüche 1 bis 6 durchführt.

## Revendications

1. Procédé exécuté sur un terminal pour signaler une perte d'une carte ou d'un dispositif associé à un numéro de compte ou un vol d'un numéro de compte, comprenant les étapes consistant à :
afficher (101) une liste de numéros de comptes prémémorisée, la liste de numéros de comptes comprenant une pluralité de numéros de comptes fournis par différents fournisseurs de services ;
recevoir (102) une instruction de signalement de perte correspondant à un numéro de compte cible parmi les numéros de la pluralité de numéros de comptes ;
déterminer un programme d'application correspondant au numéro de compte cible conformément à une relation prémémorisée entre les numéros de comptes et des programmes d'application, et transmettre (103) une première demande de signalement de perte à un programme d'application mémorisé localement déterminé, la première demande de signalement de perte véhiculant le numéro de compte cible, la première demande de signalement de perte étant utilisée pour notifier au programme d'application de transmettre une seconde demande de signalement de perte à un serveur d'enregistrement du numéro de compte cible, et
transmettre la seconde demande de signalement de perte au serveur d'enregistrement du numéro de compte cible pour notifier au serveur d'enregistrement de mettre en œuvre un traitement de signalement de perte concernant le numéro de compte cible,
dans lequel, avant l'étape de transmission de la première demande de signalement de perte au programme d'application mémorisé localement déterminé, le procédé comprend en outre les étapes consistant à :
déterminer un mode d'authentification cible conformément à des informations de scénario de signalement de perte entrées par un utilisateur ;
délivrer des informations d'invite d'authentification correspondant au mode d'authentification cible ;
acquérir des informations d'authentification entrées par l'utilisateur, et transmettre les informations d'authentification à un serveur d'arrière-plan, permettant au serveur d'arrière-plan d'authentifier l'utilisateur conformément aux informations d'authentification ; et
exécuter l'étape de transmission de la première demande de signalement de perte au programme d'application mémorisé localement déterminé lors de la réception du message de succès d'authentification transmis par le serveur d'arrière-plan,
dans lequel, avant l'étape de détermination du programme d'application correspondant au numéro de compte cible conformément à la relation, le procédé comprend en outre les étapes consistant à :
diffuser, lors de la réception du numéro de compte entré par l'utilisateur, le numéro de compte à chacun des programmes d'application ;
recevoir un message de confirmation transmis par le programme d'application mémorisé localement déterminé confirmant que le numéro de compte est un numéro de compte enregistré du programme d'application mémorisé localement déterminé ; et
établir la relation entre le numéro de compte et le programme d'application mémorisé localement déterminé.

2. Procédé selon la revendication 1, dans lequel l'étape de détermination d'un mode d'authentification cible conformément à des informations de scénario de signalement de perte entrées par l'utilisateur consiste à :
déterminer le mode d'authentification cible conformément aux informations de scénario de signalement de perte entrées par l'utilisateur lorsque des informations d'utilisation d'un terminal mobile de l'utilisateur sur une période prédéfinie avant le temps courant correspondent à des informations d'utilisation de référence du terminal mobile de l'utilisateur ; et
le procédé comprend en outre l'étape consistant à :
déterminer un mode d'authentification prédéfini en tant que le mode d'authentification cible lorsque les informations d'utilisation ne correspondent pas aux informations d'utilisation de référence.

3. Procédé selon la revendication 1, dans lequel l'étape de détermination d'un mode d'authentification cible conformément à des informations de scénario de signalement de perte entrées par l'utilisateur consiste à :
déterminer le mode d'authentification cible parmi d'autres modes d'authentification à l'exception d'un mode d'authentification interdit correspondant aux informations de scénario de signalement de perte entrées par l'utilisateur.

4. Procédé selon la revendication 1, dans lequel l'étape de détermination d'un mode d'authentification cible conformément à des informations de scénario de signalement de perte entrées par l'utilisateur consiste à :
déterminer le mode d'authentification cible parmi des modes d'authentification disponibles correspondant aux informations de scénario de signalement de perte entrées par l'utilisateur.

5. Procédé selon la revendication 1, comprenant en outre les étapes consistant à :
recevoir une instruction d'ajout de numéro de compte, l'instruction d'ajout de numéro de compte véhiculant un numéro de compte entré par un utilisateur ; et
ajouter le numéro de compte à la liste de numéros de comptes.

6. Procédé selon la revendication 1, dans lequel l'étape de transmission de la seconde demande de signalement de perte au serveur d'enregistrement du numéro de compte cible est mise en œuvre par le programme d'application recevant la première demande de signalement de perte.

7. Appareil destiné à signaler une perte d'une carte ou d'un dispositif associé à un numéro de compte ou un vol d'un numéro de compte, comprenant :
un module d'affichage (510), configuré pour afficher une liste de numéros de comptes prémémorisée, la liste de numéros de comptes comprenant une pluralité de numéros de comptes ;
un premier module de réception (520), configuré pour recevoir une instruction de signalement de perte correspondant à un numéro de compte cible parmi les numéros de la pluralité de numéros de comptes ;
un premier module de transmission (530), configuré pour déterminer un programme d'application correspondant au numéro de compte cible conformément à une relation prémémorisée entre les numéros de comptes et des programmes d'application, et pour transmettre une première demande de signalement de perte au programme d'application mémorisé localement déterminé, la première demande de signalement de perte véhiculant le numéro de compte cible, la première demande de signalement de perte étant utilisée pour notifier au programme d'application de transmettre une seconde demande de signalement de perte à un serveur d'enregistrement du numéro de compte cible ;
un second module de transmission, configuré pour transmettre la seconde demande de signalement de perte au serveur d'enregistrement du numéro de compte cible pour notifier au serveur d'enregistrement de mettre en œuvre un traitement de signalement de perte concernant le numéro de compte cible,
un module de sortie (540), comprenant : un sous-module de détermination (541), configuré pour déterminer un mode d'authentification cible conformément à des informations de scénario de signalement de perte entrées par un utilisateur ; et un sous-module de sortie (542), configuré pour délivrer des informations d'invite d'authentification correspondant au mode d'authentification cible ;
un module d'acquisition (550), configuré pour acquérir des informations d'authentification entrées par l'utilisateur, et pour transmettre les informations d'authentification à un serveur d'arrière-plan, permettant au serveur d'arrière-plan d'authentifier l'utilisateur conformément aux informations d'authentification ; dans lequel
le premier module de transmission est en outre configuré pour transmettre la première demande de signalement de perte au programme d'application mémorisé localement déterminé correspondant au numéro de compte cible lors de la réception d'un message de succès d'authentification transmis par le serveur d'arrière-plan,
dans lequel, avant la détermination du programme d'application correspondant au numéro de compte cible conformément à la relation, le premier module de transmission est en outre configuré pour :
diffuser, lors de la réception du numéro de compte entré par l'utilisateur, le numéro de compte à chacun des programmes d'application ;
recevoir un message de confirmation transmis par le programme d'application mémorisé localement déterminé confirmant que le numéro de compte est un numéro de compte enregistré du programme d'application mémorisé localement déterminé ; et
établir la relation entre le numéro de compte et le programme d'application mémorisé localement déterminé.

8. Appareil selon la revendication 7, dans lequel le sous-module de détermination est configuré pour :
déterminer le mode d'authentification cible conformément aux informations de scénario de signalement de perte entrées par l'utilisateur lorsque des informations d'utilisation d'un terminal mobile de l'utilisateur sur une période prédéfinie avant le temps courant correspondent à des informations d'utilisation de référence du terminal mobile de l'utilisateur ; et
le sous-module de détermination est en outre configuré pour :
déterminer un mode d'authentification prédéfini en tant que le mode d'authentification cible lorsque les informations d'utilisation ne correspondent pas aux informations d'utilisation de référence.

9. Appareil selon la revendication 7, dans lequel le sous-module de détermination est configuré pour :
déterminer le mode d'authentification cible parmi d'autres modes d'authentification à l'exception d'un mode d'authentification interdit correspondant aux informations de scénario de signalement de perte entrées par l'utilisateur, ou déterminer le mode d'authentification cible parmi des modes d'authentification disponibles correspondant aux informations de scénario de signalement de perte entrées par l'utilisateur.

10. Programme d'ordinateur, qui, lorsqu'il est exécuté sur un processeur d'un dispositif terminal, met en œuvre un procédé pour signaler une perte d'une carte ou d'un dispositif associé à un numéro de compte ou un vol d'un numéro de compte selon l'une quelconque des revendications 1 à 6.
